# EUROPÄISCHE PATENTSCHRIFT

(11) **EP 3 831 211 B1**
(45) Veröffentlichungstag und Bekanntmachung des Hinweises auf die Patenterteilung: **13.11.2024**
(21) Anmeldenummer: 20209692.1
(22) Anmeldetag: 25.11.2020
(51) Int. Cl.: A23F 5/02, A23F 5/16

(54) **VERFAHREN ZUM BEHANDELN VON KAFFEEBOHNEN**
METHOD FOR TREATING COFFEE BEANS
PROCÉDÉ DE TRAITEMENT DES GRAINS DE CAFÉ

(30) Priorität: 25.11.2019 DE 102019218199
(43) Veröffentlichungstag der Anmeldung: 09.06.2021
(73) Patentinhaber: SternEnzym GmbH & Co. KG, 22926 Ahrensburg (DE)
(72) Erfinder: Popper, Lutz, 22527 Hamburg (DE); Berger, Ralf G., 30455 Hannover (DE)
(74) Vertreter: Grünecker Patent- und Rechtsanwälte PartG mbB

(56) Entgegenhaltungen:
- EP-A1- 0 107 171
- CN-A- 107 223 746
- US-A- 2 089 116
- LUCA SILVIA DE ET AL: "Simultaneous quantification of caffeine and chlorogenic acid in coffee green beans and varietal classification of the samples by HPLC-DAD coupled with chemometrics", ENVIRONMENTAL SCIENCE AND POLLUTION RESEARCH INTERNATIONAL, ECOMED, LANDSBERG, DE, vol. 25, no. 29, 11 February 2018 (2018-02-11), pages 28748 - 28759, XP036598817, ISSN: 0944-1344, [retrieved on 20180211], DOI: 10.1007/S11356-018-1379-6

## Beschreibung

Die vorliegende Erfindung betrifft ein Verfahren zum Behandeln von Kaffeebohnen, insbesondere zum Bereitstellen von Kaffeebohnen mit verringerter Konzentration an Chlorogensäure im Vergleich zu unbehandelten Kaffeebohnen. Ferner wird eine ungeröstete Kaffeebohne, insbesondere eine grüne Kaffeebohne oder eine ungetrocknete Kaffeebeere beschrieben, die gemäß dem erfindungsgemäßen Verfahren hergestellt wurde.

Kaffee ist ein schwarzes, psychotropes, koffeinhaltiges Heißgetränk, das aus gerösteten und gemahlenen Kaffeebohnen, den Samen der Frucht der Kaffeepflanze (Coffea *arabica* und Coffea *robusta* Sorten), durch Extraktion mit heißem Wasser hergestellt wird. Die Früchte der Kaffeepflanze sind rote, kirschenähnliche Steinfrüchte mit meist zwei Steinkernen. Diese Steinkerne sind die eigentlichen Kaffeebohnen. Die roten, kirschenähnlichen Früchte werden auch Kaffeebeeren oder Kaffeekirschen genannt.

Neben dem Koffein ist Chlorogensäure in hoher Konzentration in den Kaffeebohnen enthalten. Der Gehalt an Chlorogensäure liegt bei ungeröstetem Kaffee über 6 %, im Durchschnitt bei 7 Gewichts-% (also 7 g pro 100 g). Bei gerösteten Kaffeebohnen liegt der Gehalt an Chlorogensäure je nach Grad der Röstung und Herkunft zwischen 3 bis 4,5 %. Dieser hohe Gehalt an Chlorogensäure wird für die Empfindlichkeit vieler Verbraucher gegenüber größeren Kaffeemengen verantwortlich gemacht.

Der enzymatische Abbau von Chlorogensäure, beispielsweise in Kaffeepulpe, ist unter anderem aus der EP 2 987 802 A1 bekannt. Aus der WO 2009/132887 A1 ist eine Zusammensetzung zur Herstellung eines Getränks bekannt. Die Zusammensetzung umfasst einen Mikroorganismus und/oder ein Enzym, das Chlorogensäuren eines Kaffeeextraktes zu Phenolsäuren, denen aufgrund ihres Phenolcharakters antioxidative Eigenschaften und somit positive gesundheitliche Wirkungen zugeschrieben werden, hydrolysieren kann. Dadurch steigt auch die Bekömmlichkeit des Kaffees. Für den Anwender wäre es allerdings erstrebenswert, den Chlorogensäuregehalt bereits in der Kaffeebohne zu reduzieren, um die umständliche Zugabe eines Mikroorganismus und/oder Enzyms zum Kaffeeextrakt zu vermeiden.

Die wissenschaftliche Veröffentlichung von Luca Silva et al., "Simultaneous quantification of caffeine and chlorogenic acid in coffee green beans and varietal classification of the samples by HPLC-DAD coupled with chemometrics", veröffentlicht in Environmental Science and Pollution Research International, Band 25, Nummer 28, Seiten 28748-28759, betrifft ein Verfahren zur Quantifizierung von Koffein und Chlorogensäure in grünen Kaffeebohnen mittels HPLC-DAD und Chemometrik. In Tabelle 4 ist die grüne Kaffeebohnen *Arabica Peru* angeführt, die einen Chlorogensäuregehalt von 25,7 ±1,5 mg/g aufweist.

In der US 2,089,116 A ist ein Verfahren zur Behandlung von Kaffeebohnen beschrieben, um schädliche Bestandteile wie Chlorogensäure zu beseitigen. Dabei werden die Kaffeebohnen geöffnet und die in den geöffneten Kaffeebohnen enthaltene Chlorogensäure mittels Elektrolyse aufgebrochen (gecrackt).

Die europäische Patentanmeldung EP 0 107 171 A1 betrifft ein Verfahren zur Verminderung des Chlorogensäuregehalts von Rohkaffee. Dabei werden wasserlösliche säurehaltige Stoffe mittels einer wässrigen Flüssigkeit aus den rohen Kaffeebohnen extrahiert und in einem Anionenaustauscherharz gegen eine flüchtige Carbonsäure ausgetauscht. Abschließend wird die aufbereitete Extraktlösung wieder mit den extrahierten Kaffeebohnen zusammengegeben.

Die CN 107 223 746 A offenbart ein Verfahren zum Herstellen fermentierter Kaffeebohnen mit folgenden Schritten: 1. das Reinigen des Kaffees nach dem Pflücken, 2. mechanisches Schälen des Kaffees, 3. Fermentieren der geschälten Kaffeebohnen, 4. Reinigen der fermentierten Kaffeebohnen, 5. Trocknen der gereinigten Kaffeebohnen, 6. mechanisches Schälen der getrockneten Kaffeebohnen und 7. Mikrowellenröstung. Die Mikrowellenröstung umfasst eine erste Mikrowellenröstung, bei welcher eine Zweifrequenz-Ultraschallwechselbehandlung für 25 bis 50 Minuten vorgenommen wird. In einem zweiten Mikrowellenschritt werden die Kaffeebohnen 5 bis 15 Pulsen eines elektrischen Feldes einer Intensität von 20 bis 40 kV/cm ausgesetzt.

Die Aufgabe der vorliegenden Erfindung ist somit, ein Verfahren bereitzustellen, mit dem die Konzentration an Chlorogensäure in Kaffeebohnen, vorzugsweise vor deren Extraktion bereits reduziert werden kann.

Erfindungsgemäß wird diese Aufgabe gelöst durch ein Verfahren zum Behandeln von Kaffeebohnen, insbesondere zum Bereitstellen von Kaffeebohnen mit verringerter Konzentration an Chlorogensäure im Vergleich zu unbehandelten Kaffeebohnen, umfassend die folgenden Schritte:
- Behandeln der Kaffeebohnen mit einem elektrischen Feld, und
- In-Kontakt-Bringen der Kaffeebohnen mit einem Reagens, das mit Chlorogensäure reagiert, wobei das Reagens ein Chlorogensäure-spaltendes Enzym oder einen Mikroorganismus, der ein Chlorogensäure spaltendes Enzym exprimiert, umfasst.

Es hat sich überraschenderweise gezeigt, dass die Behandlung der Bohnen mittels elektrischem Feld die Reaktion des Reagens mit Chlorogensäure so stark begünstigt, dass der Gehalt, also die Konzentration an Chlorogensäure in der Kaffeebohne signifikant und auch für magenempfindliche Trinker auf ein bekömmliches Maß gesenkt werden kann. Die damit hergestellte ungeröstete Kaffeebohne weist einen Chlorogensäuregehalt von weniger als 2,0 Gewichts-% auf. Dies ist insofern überraschend, als Kaffeebohnen, insbesondere ungemahlene Kaffeebohnen wie grüne Kaffeebohnen, nur schwer penetrierbar sind. Reagenzien wirken oft nur oberflächlich an diesen Kaffeebohnen. Die Verbesserung der Penetration durch mechanische Methoden wie Zerkleinern, Aufrauen oder Verursachen von Brüchen in der Struktur der Bohne sind insbesondere bei ungerösteten Kaffeebohnen aufgrund des anschließenden Röstprozesses nicht möglich. Das erfindungsgemäße Verfahren stellt somit eine Möglichkeit bereit, den Gehalt der Chlorogensäure bereits in der Kaffeebohne erheblich zu senken und den Kaffee auf diese Weise für empfindliche Verbraucher bekömmlicher zu machen, ohne dass die Verbraucher Zusatzstoffe zu ihrem Kaffeeprodukt hinzuzufügen brauchen.

Unter Kaffeebohnen mit weniger, also einer verringerten Konzentration an Chlorogensäure im Vergleich zu unbehandelten Kaffeebohnen ist zu verstehen, dass die behandelten Kaffeebohnen im Vergleich zu entsprechenden Kaffeebohnen, die nicht den Schritten des erfindungsgemäßen Verfahrens ausgesetzt wurden, einen geringeren Chlorogensäuregehalt aufweisen. Chlorogensäure umfasst die vollständige Familie der Ester aus Chinasäure und Hydroxyzimtsäuren (Kaffee-, Ferula-, p-Cumarsäure), inklusive der Hauptverbindung 5-Caffeoylchinasäure und der weiteren Monoester der Kaffeesäure. Verfahren zur Bestimmung des Chlorogensäuregehaltes, beispielsweise mit Hilfe der Hochdruckflüssigkeitschromatografie auf einer C8-Säule mit Tetrahydrofuran und mit Eisessig versetztem Wasser als Fließmittel sind bekannt.

Die Erfindung kann mit den folgenden, jeweils für sich vorteilhaften und beliebig miteinander kombinierbaren Weiterentwicklungen und vorteilhaften Ausgestaltungen weiter verbessert werden.

Gemäß einem Ausführungsbeispiel kann das Reagens die Chlorogensäure in der Kaffeebohne in Chinasäure und Hydroxyzimtsäure, wie Kaffeesäure, spalten. Diese Spaltung senkt den Chlorogensäuregehalt und erhöht gleichzeitig den Gehalt an Kaffeesäure und Chinasäure in der Kaffeebohne. Kaffeesäure hat aufgrund ihres Phenolcharakters antioxidative Eigenschaften, denen positive gesundheitliche Wirkungen zugeschrieben werden. Darmbakterien sind in der Lage, aus Chinasäure Tryptophan zu bilden und in das Darmlumen zu sezernieren. Der erhöhte Tryptophanspiegel aktiviert das Serotoninsystem, was einer Reihe von Störungen der Stimmungslage, beispielsweise der Depression, und auch Schlafproblemen entgegenwirken kann.

Das Reagens ist ein Chlorogensäure-spaltendes Enzym oder einen Mikroorganismus, der ein Chlorogensäure spaltendes Enzym exprimiert. Das Reagens kann fernen zusätzlich ein Lysat eines solchen Mikroorganismus umfassen. Auf diese Weise wird ein biologisches und für die Behandlung von Kaffeebohnen aus gesundheitlicher Sicht unbedenkliches Reagens eingesetzt, das effektiv die Chlorogensäure spaltet. Der Mikroorganismus kann beispielsweise ausgewählt sein aus der Gruppe umfassend *Aspergillus* sp., *Aspergillus niger, Aspergillus sojae, Aspergillus japonicus, Aspergillus oryzae, Talaromyces* sp., *Talaromyces stipitatus, Anaeromyces* sp. *Anaeromyces mucronatus, Ustilago* sp., *Penicillium funicolusum, Ustilago maydis, Neurospora* sp., *Neurospora crassa.* Diese Mikroorganismen sind dafür bekannt, Enzyme zu exprimieren, die Ferulasäuresaccharidester und verwandte Ester spalten (Ferulasäureesterasen). Weniger bekannt, jedoch auch möglich, sind bakterielle Quellen wie *Pseudomonas fluorescens* oder Chlos*tridium spp.*

Das Reagens, welches mit den Kaffeebohnen in Kontakt gebracht wird und mit der Chlorogensäure reagiert, kann beispielsweise eine Hydrolase, vorzugsweise eine Esterase, wie eine Ferulasäureesterase, und besonders bevorzugt eine Chlorogensäure-Hydrolase enthalten. Hydrolasen spalten das Substrat, hier die Chlorogensäure, auf unbedenkliche Weise durch Anlagerung von Wasser. Die Esterase sorgt dafür, dass der Ester Chlorogensäure in die gewünschten Bestandteile Kaffeesäure und Chinasäure gespalten wird. Besonders effektiv kann diese Spaltung durch eine Chlorogensäure-Hydrolase, vorzugsweise der Klasse EC 3.1.1.24, erfolgen.

Das Enzym zur Spaltung der Chlorogensäure kann in gelöster Form vorliegen, was den Schritt des In-Kontakt-Bringens begünstigt und insbesondere im Falle einer Hydrolase das für die Spaltungsreaktion benötigte Wasser bereitstellt.

Der Schritt des In-Kontakt-Bringens kann erfolgen durch ein Einweichen der Kaffeebohnen in einer Lösung, die das Reagens umfasst, oder durch oberflächliches Anfeuchten mit einer Flüssigkeit, die das Reagens, das mit Chlorogensäure reagiert, umfasst. Das Einweichen, bei dem die Kaffeebohnen in die Flüssigkeit eingelegt werden, kann die Penetration des Reagens begünstigen, da ein Einweichen die Kaffeebohnen in der Regel auch erweicht und somit für äußerliche Faktoren zugänglicher macht. Ein oberflächliches Anfeuchten ist ökonomischer und schneller durchzuführen. Es sind keine Stehzeiten wie beim Einweichen erforderlich und die Flüssigkeit wird lediglich oberflächlich auf die Kaffeebohnen appliziert. Der Schritt des In-Kontakt-Bringens kann mindestens 30 Minuten dauern.

Gemäß einer weiteren Ausführungsform des erfindungsgemäßen Verfahrens können die behandelten Kaffeebohnen ungeröstete Bohnen, grüne Bohnen oder die Steinkerne von ungetrockneten Kaffeebeeren sein. Unter ungeröstete Bohnen fallen die Kaffeebohnen in jedem Stadium vor der Röstung, von der Ernte der Kaffeebeeren bis zu den grünen Bohnen unmittelbar vor dem Röstprozess. Grüne Bohnen sind die aufbereiteten, getrockneten und gereinigten Kaffeebohnen vor der Röstung. Die Steinkerne von ungetrockneten Kaffeebeeren sind die Bohnen in einem Stadium zwischen der Ernte und deren Trocknung.

Beim Behandeln mit einem elektrischen Feld können die Kaffeebohnen elektroporiert werden, das heißt, die Zellmembran wird vorübergehend (reversibel) oder dauerhaft (irreversibel) permeabel. Das angelegte elektrische Feld kann einen kontrollierten Zellaufschluss bewirken, bei dem der Grad des Zellaufschlusses auf einen vorbestimmten Wert eingestellt wird. Beim Behandeln kann insbesondere ein gepulstes elektrisches Feld (PEF: Pulsed Electric Field) angelegt werden, was einen Zellaufschluss bewirkt. Das angelegte elektrische Feld kann insbesondere ein nicht-thermisch wirkendes elektrisches Feld sein, bei dem die Energieobergrenze so bemessen ist, dass im Wesentlichen keine Erwärmung der Kaffeebohnen im Sinne einer Ohmschen Erhitzung stattfindet. Die Aufhebung der Semipermeabilität und der damit verbundene Zellaufschluss verbessert den Massentransport des Reagens in die Zellstrukturen und somit die Reaktion bzw. Spaltung der Chlorogensäure. Diese Semipermeabilität der Zugmittel kann reversibel oder irreversibel aufgehoben werden. Eine irreversible Elektroporation ist vorteilhaft, weil sie die dauerhafte Aufhebung der Permeabilität und somit mehr Flexibilität bei der Abfolge der Verfahrensschritte lässt. Eine reversible Elektroporation ist insbesondere dann günstig, wenn die Schritte des Behandelns der Kaffeebohnen mit dem elektrischen Feld und das In-Kontakt-Bringen der Kaffeebohnen mit dem Reagens unmittelbar aufeinander folgen bzw. gleichzeitig durchgeführt werden.

Beim Behandeln mit einem elektrischen Feld kann ein Energieeintrag von wenigstens 0,1 kJ/kg, vorzugsweise von wenigstens 1 kJ/kg in die Pflanzensamen erfolgen. Ein Energieeintrag in dieser Größenordnung ist gut geeignet, die Textur und Struktur der Kaffeebohnen zu beeinflussen und die Durchlässigkeit für das Reagens in die Zellen der Kaffeebohnen zu verbessern. Um den Energieeintrag zu optimieren und energetisch unnötige Behandlungen der Kaffeebohnen zu vermeiden, kann der Energieeintrag in die Kaffeebohnen 1 kJ/kg bis 300 kJ/kg, vorzugsweise von 3 kJ/kg bis 60 kJ/kg bzw. 5 kJ/kg bis 50 kJ/kg in die Kaffeebohnen betragen.

Es hat sich als vorteilhaft erwiesen, wenn die Kaffeebohnen einem elektrischen Feld von 0,1 kV/cm bis 10 kV/cm, vorzugsweise von 0,5 kV/cm bis 4 kV/cm und besonders bevorzugt von 1 kV/cm bis 3 kV/cm ausgesetzt werden. Derartige Feldstärken lassen sich mit handelsüblichen industriellen Kondensatoren erzielen und vermeiden, dass unerwünschte thermische Effekte auftreten, die zu nicht beabsichtigten Veränderungen der Kaffeebohnen führen.

Besonders effektiv können Kaffeebohnen mittels elektrischer Pulse behandelt werden, um im Rahmen der vorliegenden Erfindung die Wirksamkeit des Reagens beim Abbau der Chlorogensäure zu verstärken. Dazu können die Kaffeebohnen in einer Anlage behandelt werden, die beispielsweise einen Kondensator mit wenigstens zwei Elektroden umfasst, die mit einem Impulsgenerator als Spannungsquelle verbunden sind. Das elektrische Feld, insbesondere die elektrischen Pulse, die damit erzeugt werden, können sowohl durch Direktkontakt der Elektroden des Kondensators mit den Kaffeebohnen als auch über leitende Fluide erzeugt werden, wobei die Pflanzensamen ganz oder teilweise in die Fluide eingelegt werden bzw. mit diesen Fluiden vor Behandlung mit dem elektrischen Feld benetzt, also oberflächlich angefeuchtet werden. Es können verschiedene Elektrodenformen zur Anwendung kommen, beispielsweise Platten-, Ring-, Gitter-, Hohl- oder Durchflusselektroden, die auf verschiedenste Art, beispielsweise parallel, koaxial, kollinear, konisch oder als Ringspalt angeordnet sein können. Als Impulsgenerator kann ein Hochspannungsimpulsgenerator, beispielsweise ein Marx-Generator eingesetzt werden, der elektrische Felder in Form von kurzen Pulsen im Mikro- bis Millisekundenbereich einer hohen Spannung im Kilovoltbereich erzeugt. Derartige Hochspannungsimpulse bewirken bei den zu behandelnden Kaffeebohnen eine Elektroporation, was insbesondere eine Permeabilisierung der Zellmembran zur Folge hat und die Struktur und Textur der Kaffeebohnen auf besonders einfache und nicht-thermische Art und Weise vorteilhaft die bessere Wirksamkeit des eingesetzten Reagens beeinflusst.

Im Sinne einer Zeit- und Energieoptimierung können die Kaffeebohnen mit wenigstens 10 elektrischen Pulsen, vorzugsweise 10 bis 200 elektrischen Pulsen und besonders bevorzugt 30 bis 50 elektrischen Pulsen behandelt werden. Die Dauer der elektrischen Pulse kann 5 µs bis 4 ms vorzugsweise 100 µs bis 1 ms sein.

Gemäß einer weiteren Ausführungsform des erfindungsgemäßen Verfahrens können die Kaffeebohnen mit einem elektrischen Feld behandelt werden, bevor die Kaffeebohnen mit dem Reagens in Kontakt gebracht werden. Sollte die Behandlung mit dem elektrischen Feld zu einer irreversiblen Elektroporation führen, kann der Schritt des In-Kontakt-Bringens an einer beliebigen Stelle der Aufbereitung der Kaffeebohnen im Anschluss an die Behandlung mit dem elektrischen Feld erfolgen. Es ist in diesem Fall somit beispielsweise möglich, zunächst weitere Zwischenschritte wie Reinigungs- oder Waschschritte bzw. ein Sortieren durchzuführen, bevor die zuvor mit dem elektrischen Feld behandelten, irreversibel elektroporierter Kaffeebohnen anschließend mit dem Reagens in Kontakt gebracht werden.

Es ist gemäß einer weiteren Ausführungsform möglich, die Kaffeebohnen mit dem elektrischen Feld zu behandeln, während sie mit dem Reagens in Kontakt gebracht werden. In diesem Fall finden die Verfahrensschritte des Behandelns der Kaffeebohnen mit einem elektrischen Feld und des In-Kontakt-Bringens der Kaffeebohnen mit dem Reagens gleichzeitig statt. Hier kann beispielsweise das Reagens in gelöster Form vorliegen und die Kaffeebohnen können beim Anlegen des elektrischen Feldes in das Fluid mit gelöstem Reagens eingelegt sein bzw. oberflächlich mit diesem Fluid befeuchtet worden sein.

Gemäß einer weiteren Ausführungsform können die Kaffeebohnen mit einem elektrischen Feld behandelt werden, nachdem die Kaffeebohnen getrocknet wurden und, falls für die Behandlung mit dem elektrischen Feld erforderlich, gegebenenfalls anschließend angefeuchtet wurden. Bei dieser Ausführungsform haben die Kaffeebohnen den Trocknungsschritt bereits vollzogen und liegen, je nach Aufbereitungsform und -grad, als getrocknete Kaffeebeere bei einer Trockenaufbereitung bzw. als getrockneter Pergamentkaffee bei einer Nassaufbereitung oder als grüne Bohnen vor. Nachbehandlungsschritte der getrockneten Kaffeebeere bzw. des getrockneten Pergamentkaffees, beispielsweise eine Reinigung, ein Schälen bzw. ein Sortieren, können ebenfalls bereits erfolgen, bevor die Kaffeebohnen mit dem elektrischen Feld behandelt werden und/oder mit dem Reagens in Kontakt gebracht werden.

Gemäß einer anderen Ausführungsform können die Kaffeebohnen mit einem elektrischen Feld behandelt werden, bevor die Kaffeebohnen getrocknet werden. Bei nassaufbereiteten Kaffeebeeren kann die Behandlung des elektrischen Feldes beispielsweise vor oder unmittelbar nach dem Schritt des Waschens und somit nach dem Entpulpen und Fermentieren erfolgen. Dieser Schritt ist insofern günstig, als die Kaffeebohne in diesem Stadium bereits gereinigt und die Pulpe entfernt bzw. Schleimstoffe ausgewaschen wurden und sich die Kaffeebohnen in einem feuchten und für die Behandlung mit dem elektrischen Feld gut geeigneten Zustand befinden.

Die Kaffeebohnen können mit dem Reagens in Kontakt gebracht werden, beispielsweise nachdem die Pulpe von den Kaffeebohnen entfernt wurde. Das Entfernen der Pulpe erleichtert das Eindringen des Reagens in die Kaffeebohnen, insbesondere deren Zellen und verbessert somit die Reaktion, vorzugsweise Spaltung der Chlorogensäure.

Die Kaffeebohnen können insbesondere mit dem Reagens in Kontakt gebracht werden, nachdem die Kaffeebohnen fermentiert und gewaschen wurden. In diesem Stadium ist bei nass aufbereiteten Kaffeebohnen bereits der Großteil der zu entfernenden Pulpe und Schleimstoffe von den zu behandelnden Kaffeebohnen abgetrennt.

Besonders bevorzugt können die Kaffeebohnen mit dem Reagens in Kontakt gebracht werden, nachdem die Kaffeebohnen getrocknet und geschält wurden. In diesem Stadium liegen im Wesentlichen grüne Kaffeebohnen vor, die gegebenenfalls noch nach Größe, Dichte und/oder Farbe sortiert werden bzw. bereits sortiert worden sind.

Mit Hilfe des erfindungsgemäßen Verfahrens ist es möglich, ungeröstete Kaffeebohnen bereitzustellen, die einen Chlorogensäuregehalt von weniger als 2 Gewichts-% aufweisen. Dies liegt deutlich unter den durchschnittlichen Chlorogensäuregehalten von 7 Gewichts-% unbehandelter und ungerösteter Kaffeebohnen. Die ungeröstete Kaffeebohne kann vorzugsweise eine grüne Kaffeebohne oder der Steinkern einer ungetrockneten Kaffeebeere sein.

Mit dem erfindungsgemäßen Verfahren kann durch geeignete Bedingungen der Schritte des Behandelns der Kaffeebohnen mit dem elektrischen Feld und des In-Kontakt-Bringens der Kaffeebohnen mit dem Reagens ein vordefinierter Chlorogensäuregehalt in der Kaffeebohne eingestellt werden. Der Chlorogensäuregehalt kann vorzugsweise im Bereich von 0,5 bis 5 Gewichts-%, besonders bevorzugt von 1 bis 2,5 Gewichts-% liegen. Die Kaffeebohne kann somit einen Chlorogensäuregehalt von 1 bis 2,0 Gewichts-% aufweisen. Bei entsprechender Wahl des Reagens, das mit Chlorogensäure reagiert, und der Behandlungsbedingungen mit dem elektrischen Feld kann die Konzentration an Chlorogensäure auch sehr gering, d.h. annähernd Null, sein.

Im Folgenden wird die Erfindung anhand vorteilhafter Ausgestaltungen mit Bezug auf die Zeichnungen beispielhaft näher erläutert. Die dabei dargestellten vorteilhaften Weiterentwicklungen und Ausgestaltungen sind jeweils voneinander unabhängig und können beliebig miteinander kombiniert werden, je nachdem, wie es im Anwendungsfall notwendig ist.

Es zeigen:
- Fig. 1: ein Fließschema der üblichen Verfahrensschritte bei der Aufbereitung der geernteten Kaffeebeeren bis zum Stadium der grünen, ungerösteten Kaffeebohnen;
- Fig. 2: eine erste beispielhafte Ausführungsform des erfindungsgemäßen Verfahrens;
- Fig. 3: eine weitere beispielhafte Ausführungsform des erfindungsgemäßen Verfahrens; und
- Fig. 4: eine dritte beispielhafte Ausführungsform des erfindungsgemäßen Verfahrens;
- Fig. 5: ein Balkendiagramm über den Einfluss der Einwirkzeit auf die Verringerung der Chlorogensäurekonzentration in grünen Kaffeebohnen; und
- Fig. 6: ein Balkendiagramm zum Einfluss der Behandlung von Kaffeebohnen mit einem elektrischen Feld auf die Chlorogensäurekonzentration in grünen Kaffeebohnen.

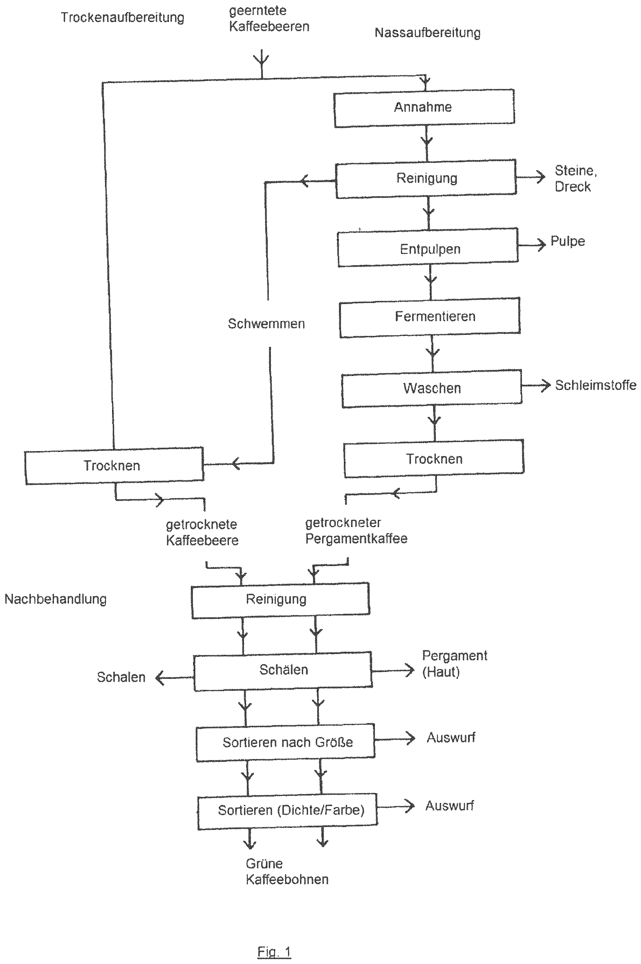

Nachfolgend wird unter Bezugnahme auf Fig. 1 die Aufbereitung der geernteten Kaffeebeere bis zum Stadium der grünen, ungerösteten Kaffeebohnen beschrieben. Kaffeebohnen werden einmal im Jahr, in einigen Anbaugebieten auch zweimal jährlich geerntet. Es gibt grundsätzlich zwei Arten, reife Kaffeebeeren (auch Kaffeekirschen genannt) zu ernten. Bei der "Picking-Methode" werden die reifen Kaffeebeeren von Hand gepflückt. Bei der "Stripping-Methode" werden alle Beeren, unabhängig von ihrem Reifegrad, entweder von Hand oder mit Maschinen abgestreift und gegebenenfalls nachsortiert.

Bei der Aufbereitung der Kaffeebohne werden die Fruchthaut, das Fruchtfleisch (auch Pulpe genannt), der der auf dem Pergamenthäutchen befindliche Schleim, das Pergamenthäutchen und, soweit wie möglich, auch das Silberhäutchen entfernt. Das kann auf trockenem Weg (Trockenaufbereitung) oder auf nassem Wege (Nassaufbereitung) erfolgen.

Bei der Trockenaufbereitung werden die geernteten Kaffeebeeren direkt getrocknet. Erst im Rahmen der Nachbehandlung wird von den getrockneten Kaffeebeeren die trockene Fruchthaut und das trockene Fruchtfleisch mechanisch abgeschält.

Bei der Nassaufbereitung werden die geernteten Kaffeebeeren nach Annahme zunächst mit Wasser vorgereinigt, um anhaftende Schmutzpartikel, Steine etc. zu entfernen und gegebenenfalls durch Schwemmen vorsortiert.

Anschließend wird in einem "Entpulper" die Fruchthaut und die Pulpe abgequetscht.

Die entpulpten Kaffeebeeren werden dann in einen Fermentationsbehälter überführt. Dort findet eine Fermentation (Gärung) statt, bei welcher sich der nach wie vor den Kaffeebohnen anhaftende Schleim verflüssigt und damit abwaschbar wird.

Nach der Fermentation werden die Kaffeebohnen gewaschen, um den verflüssigten Schleim zu entfernen und anschließend getrocknet. Den im Rahmen einer Nassaufbereitung erhaltenen Kaffeebohnen haftet noch das Pergamenthäutchen an, so dass diese Kaffeebohnen im trockenen Zustand getrockneter Pergamentkaffee genannt werden.

Nach der eigentlichen Aufbereitung werden die getrockneten Kaffeebohnen (getrockneter Pergamentkaffee) bzw. getrockneten Kaffeebeeren (bei einer Trockenaufbereitung) einer Nachbehandlung unterzogen, um auch das Pergamenthäutchen und soweit wie möglich das Silberhäutchen des getrockneten Pergamentkaffees bzw. Fruchthaut, Fruchtfleisch, das Pergamenthäutchen bzw. Silberhäutchen getrockneter Kaffeebeeren zu entfernen und die Kaffeebohnen zu sortieren.

Zur Nachbehandlung wird eine weitere Reinigung durchgeführt, bevor in einem Schälschritt die Pergamenthaut bzw. das Silberhäutchen und ggf. auch Fruchthaut und Fruchtfleisch entfernt werden.

Abschließend findet eine Sortierung nach Größe und ggf. Dichte bzw. Farbe der dann ungerösteten gründen Kaffeebohnen statt. Vor dem Konsum werden die grünen Bohnen in der Regel noch geröstet und gemahlen.

Grüne Kaffeebohnen enthalten einen hohen Chlorogensäureanteil, der im Durchschnitt bei 7 Gewichts-% liegt. Dieser hohe Anteil an Chlorogensäure verringert sich zwar während der Röstung, aber auch gerösteter Kaffee enthält nach wie vor Chlorogensäure in hohen Konzentrationen, was die Empfindlichkeit vieler Verbraucher gegenüber größeren Kaffeemengen verantwortlich gemacht wird.

Um Kaffeebohnen, insbesondere ungeröstete Kaffeebohnen mit weniger Chlorogensäure bereitzustellen, ist erfindungsgemäß ein Verfahren zum Behandeln von Kaffeebohnen vorgesehen, das die Schritte des Behandelns der Kaffeebohnen mit einem elektrischen Feld und des In-Kontakt-Bringens der Kaffeebohnen mit einem Reagens, das mit Chlorogensäure reagiert, umfasst wobei das Reagens ein Chlorogensäure-spaltendes Enzym oder einen Mikroorganismus, der ein Chlorogensäure spaltendes Enzym exprimiert, umfasst.

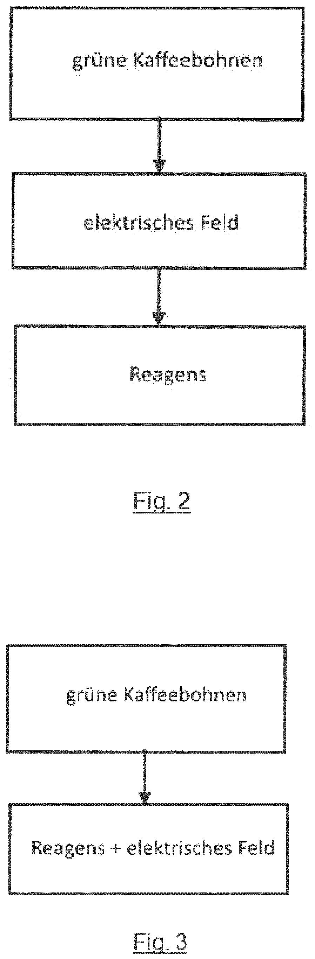

Beispielhafte Ausführungsformen dieses erfindungsgemäßen Verfahrens sind in den Fig. 2 bis 3 dargestellt und werden nachfolgend beispielhafter Ausführungsformen näher erläutert.

Gemäß einer ersten Ausführungsform, die in Fig. 2 gezeigt ist, werden ungeröstete, nämlich grüne Kaffeebohnen behandelt. Die grünen Kaffeebohnen werden zunächst mit einem elektrischen Feld behandelt. Dazu können die grünen Bohnen entweder mit einer geringen Menge Wasser befeuchtet oder in Wasser eingeweicht werden, um den Effekt der Behandlung mit dem elektrischen Feld zu verstärken. Die Behandlung mit einem elektrischen Feld macht die Kaffeebohnen überraschenderweise zugänglicher und empfindlicher für das Reagens, das mit Chlorogensäure reagiert. Bevorzugt wird beim Behandeln ein gepulstes elektrisches Feld angelegt, das einen Zellaufschluss bewirkt, wobei die Kaffeebohnen vorzugsweise dabei nicht thermisch aufgeschlossen werden. Beispielsweise können die Kaffeebohnen mit wenigstens 10 elektrischen Pulsen, vorzugsweise 10 bis 200 elektrischen Pulsen, und besonders bevorzugt 30 bis 50 elektrischen Pulsen behandelt werden. Die Länge der elektrischen Pulse kann 5 µs bis 4 ms betragen, vorzugsweise jedoch 100 µs bis 1 ms. Das angelegte elektrische Feld kann von 0,01 kV/cm bis 30 kV/cm, vorzugsweise von 0,5 bis 3 kV/cm betragen. Beim Behandeln mit einem elektrischen Feld wird vorzugsweise ein Energieeintrag von wenigstens 0,01 kJ/kg, vorzugsweise von 5 bis 50 kJ/kg in die Kaffeebohnen vorgenommen. Die Behandlung mit dem elektrischen Feld modifiziert die Textur und Struktur der Kaffeebohnen und ermöglicht ein besseres Eindringen des Reagens, das mit Chlorogensäure reagiert.

Im beispielhaften Verfahren der Fig. 2 findet das In-Kontakt-Bringen der Kaffeebohnen mit einem Reagens, das mit Chlorogensäure reagiert, nach dem Schritt des Behandelns mit einem elektrischen Feld statt. Dazu können die Kaffeebohnen oberflächlich mit dem Reagens angefeuchtet oder im Reagens eingeweicht werden.

Als Reagens kommen insbesondere Reagenzien in Frage, die Chlorogensäure in Chinasäure und die entsprechende Hydroxyzimtsäure, wie Kaffeesäure spalten. Das Reagens ist ein Chlorogensäure spaltendes Enzym oder ein Mikroorganismus, der ein Chlorogensäure spaltendes Enzym exprimiert. Beispielhafte Mikroorganismen können ausgewählt sein aus der Gruppe umfassend *Aspergillus* sp., *Ustilago* sp. und *Neurospora* sp., vorzugsweise *Aspergillus niger, Aspergillus sojae, Aspergillus japonicus, Aspergillus oryzae, Talaromyces* sp., *Talaromyces stipitatus, Anaeromyces* sp. *Anaeromyces mucronatus, Ustilago maydis, Neurospora crassa* und *Rhizoctonia solani.* Besonders effektiv ist das erfindungsgemäße Verfahren, wenn das Reagens eine Hydrolase, vorzugsweise eine Esterase, wie eine Ferulasäureesterase oder eine Coumarsäureesterase und besonders bevorzugt eine Chlorogensäurehydrolase (EC 3.1.1.42) enthält.

Beim Schritt des In-Kontakt-Bringens des Reagens können die Bohnen gemäß des Verfahrens der Fig. 2 beispielsweise mit einer Chlorogensäure-Hydrolase-Lösung angefeuchtet und vorzugsweise mindestens 12 Stunden gelagert werden, bevor sie erneut getrocknet und anschließend geröstet werden.

In Fig. 3 ist eine weitere beispielhafte Ausführungsform eines erfindungsgemäßen Verfahrens gezeigt.

Das beispielhafte Verfahren der Fig. 3 unterscheidet sich vom beispielhaften Verfahren der Fig. 2 dadurch, dass der Schritt des Behandelns der Kaffeebohnen mit einem elektrischen Feld und der Schritt des In-Kontakt-Bringens der Kaffeebohnen mit einem Reagens, das mit Chlorogensäure reagiert, gleichzeitig stattfinden.

Dazu können grüne Kaffeebohnen mit dem Reagens angefeuchtet, bzw. im Reagens eingeweicht werden, bevor sie in Gegenwart des Reagens einem elektrischen Feld, beispielsweise einem gepulsten elektrischen Feld ausgesetzt werden. Das elektrische Feld verbessert überraschenderweise den Abbau der in den Kaffeebohnen enthaltenen Chlorogensäure. Anschließend können die Bohnen vorzugsweise gelagert und abschließend getrocknet bzw. geröstet werden.

Bei den beispielhaften Verfahren der Fig. 2 und 3 werden die Kaffeebohnen mit einem elektrischen Feld behandelt, nachdem die Kaffeebohnen getrocknet wurden, in den Beispielen im Stadium der grünen Kaffeebohnen.

Eine andere Ausführungsform des erfindungsgemäßen Verfahrens kann vorsehen, dass die Kaffeebohnen einem elektrischen Feld ausgesetzt werden, bevor sie getrocknet werden. Ein solches beispielhaftes Verfahren ist in Fig. 3, beispielhaft für nassaufbereitete Kaffeebohnen gezeigt.

In dem beispielhaften Verfahren werden die geernteten Kaffeebeeren (auch Kaffeekirschen genannt) sofort nach der Ernte mit einem elektrischen Feld behandelt. Die Behandlung kann bereits im Ernteland der Kaffeebohnen stattfinden. Es hat sich gezeigt, dass bei einer Behandlung mit einem elektrischen Feld in einem recht frühen Stadium insbesondere eine Behandlung erfolgversprechend ist, die zu einer irreversiblen Elektroporation der Kaffeebohnen führt. Dabei wird die Zellmembran der Zellen in den Kaffeebohnen dauerhaft in ihrer Semipermeabilität so beeinflusst, dass ein Reagens, das mit Chlorogensäure reagiert, besser und effektiver in die Zellen eindringt und mit der Chlorogensäure der Kaffeebohnen reagieren kann.

Die Nassaufbereitung, die in den beispielhaften Verfahren der Figur gezeigt ist, entspricht der allgemeinen Nassaufbereitung der Fig. 1. Der einzige Unterschied zur Nassaufbereitung der Fig. 1 ist, dass zwischen dem Schritt des Waschens, bei welchem die Schleimstoffe entfernt werden, und dem Trocknen, der Schritt des In-Kontakt-Bringens der Kaffeebohnen mit dem Reagens, das mit Chlorogensäure reagiert, erfolgt. Die Zugabe des Reagens an dieser Stelle ist insofern vorteilhaft, als die Kaffeebohnen bereits von der Fruchthaut, den Fruchtfleischresten (Pulpe) sowie den Schleimstoffen befreit wurden, was eine besonders gute Durchdringung und Verteilung des Reagens in den Kaffeebohnen gewährleistet.

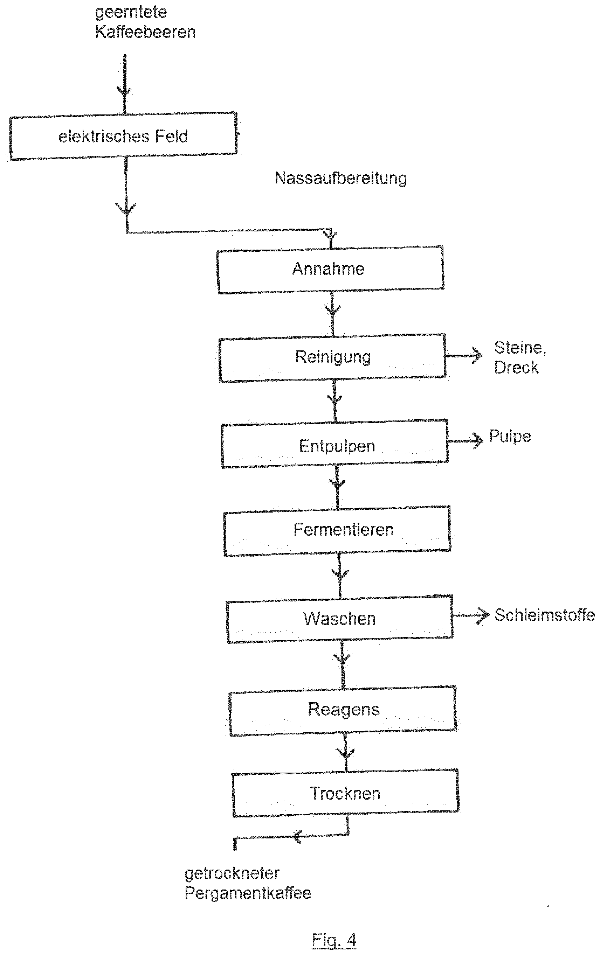

Selbstverständlich könnte das in Fig. 4 gezeigte beispielhafte Verfahren auch dahingehend modifiziert werden, dass der Schritt des Behandelns mit einem elektrischen Feld nicht an den geernteten Kaffeebeeren, sondern in Fig. 4 zwischen dem Schritt des Waschens und der Zugabe des Reagens erfolgt.

Auch weitere Modifikationen sind denkbar, beispielsweise, dass das Reagens der Waschlösung zur Entfernung der Schleimstoffe beigegeben und/oder der Fermentationsbehälter mit einem Elektroporator versehen ist, so dass die Behandlung der Kaffeebohnen mit einem elektrischen Feld während des Fermentierens stattfindet.

Nachfolgend werden anhand einiger konkreter Versuchsergebnisse beispielhafte Ausführungsformen des erfindungsgemäßen Verfahrens, sowie die damit hergestellten Kaffeebohnen und der damit erzielten Vorteile dargestellt.

Für die Versuche wurden grüne Robusta-Kaffeebohnen verwendet. Als Referenz wurden 400 g Kaffeebohnen mit 300 g Wasser gemischt und bei einer Einwirkzeit von 30 Minuten stehengelassen. Als Reagens, das mit Chlorogensäure reagiert, wurde eine Chlorogensäure-Esterase einer Aktivität von 14,14 U/ml verwendet. Es wurden Versuchsreihen mit 2,10 und 20 ml vorgenommen.

Dafür wurden Proben aus 400 g Kaffeebohnen mit 300 g Wasser hergestellt. Als erstes wurde der Schritt des Behandelns der Kaffeebohnen mit einem elektrischen Feld, nämlich mit gepulsten elektrischen Feldern (PEF) durchgeführt. Die Behandlung mit PEF erfolgten in einem Batchsystem mit Behandlungskammer. Der Energieeintrag mittels PEF war 5, 15 bzw. 50 kJ/kg bei einer Feldstärke von 3 kV/cm und einer Pulsdauer von 100 bis 400 µs.

Nach der PEF-Behandlung wurde das In-Kontakt-Bringen der Kaffeebohnen mit der Chlorogensäure-Esterase durchgeführt (die Einwirkzeit für das Enzym war entweder 0 oder 30 Minuten).

Die Chlorogensäure-Esterase wurde nach der PEF-Behandlung und vor der Einwirkzeit zugegeben.

Danach wurden die Proben für 90 Sekunden bei 2850 Umdrehungen pro Minute (1100 g) zentrifugiert, um anhaftendes Wasser zu entfernen.

Anschließend wurden die Bohnen eingefroren und hernach analysiert, um die Konzentration an Chlorogensäure darin zu bestimmen.

Enzym-Aktivitätsbestimmung: Das Standardreaktionsgemisch enthielt 25 µl der Probe, 10 µl Tris-Puffer (500 mM; pH 7,5) und 65 ml des Substrats (3 mM). Chlorogensäure und Methylferulat wurden als Standardsubstrate verwendet. Nach 1 h Inkubation bei 37 °C wurde die Reaktion durch Verdoppelung des Reaktionsvolumens mit Acetonitril beendet und die Freisetzung der entsprechenden freien Säuren mit einer Hochleistungs-Flüssigkeitschromatographie (HPLC)-UV-Methode analysiert. Die Proben wurden zentrifugiert (15 Minuten bei 15 000▪g), bevor sie in die HPLC-Säule injiziert wurden (Chromolith Performance RP-18e Umkehrphasen-Säule, 100 x 4,6 mm; Merck, Darmstadt, Deutschland). Die Trennung von Substraten und Produkten erfolgte unter Verwendung eines stufenweisen Gradienten bei einer Strömungsgeschwindigkeit von 1,5 ml min⁻¹ wie folgt: 10 ml Probe in 90 % Puffer A (0,1 % Ameisensäure) und 10 % Puffer B (Acetonitril), 10 bis 36 % Puffer B in 8 min, 36 bis 50 % Puffer B in 1,5 min, 55 bis 96 % Puffer B in 0,5 min, 96 bis 99 % Puffer B in 2,5 min, 99 bis 15 % Puffer B in 0,5 min, 15 bis 10 % Puffer B in 1 min und Reequilibrierung mit 10 % Puffer B für 1 min, für eine Gesamtlaufzeit von 14 min. Die Elution von Chlorogensäure wurde bei 323 nm mit einem Shimadzu UV-Sichtdetektor (UV-Vis; SPD-10A VP; Shimadzu Deutschland GmbH, Duisburg, Deutschland) nachgewiesen. Eine Einheit der Enzymaktivität wurde definiert als die Menge an Enzym, die unter den angegebenen Bedingungen 1 µmol freie Säure pro Minute freisetzt. Alle Messungen wurden mindestens doppelt durchgeführt. Die durchgeführten Versuche haben gezeigt, dass die Referenz eine Chlorogensäurekonzentration von 40 mg/g (4 Gewichts-%) aufweist.

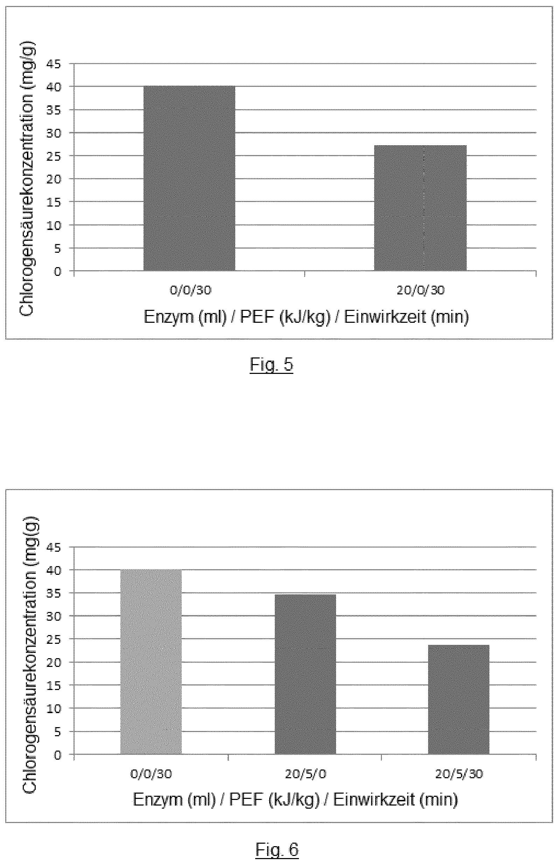

Bereits durch die PEF-Behandlung alleine lässt sich eine Verringerung der Chlorogensäurekonzentration auf 35 mg/g feststellen (mittlere Säule der Fig. 5). Eine längere Einwirkzeit mit dem Enzym führt zu einer stärkeren Senkung der Chlorogensäurekonzentration (rechte Säule der Fig. 5).

Es hat sich ferner herausgestellt, dass mit zunehmendem Energieeintrag durch PEF die Chlorogensäurekonzentration sinkt. Eine Kombination des Behandelns der Kaffeebohnen mit einem elektrischen Feld, hier PEF, und dem In-Kontakt-Bringen der Kaffeebohnen mit einem Reagens, das mit Chlorogensäure reagiert, in den Versuchen Chlorogensäure-Esterase hat eine überraschend starke Verringerung der Chlorogensäurekonzentration auf unter 2 Gewichts-% (nämlich 18 mg/g, siehe rechte Säule der Fig. 6) bereits nach einer Einwirkzeit von 30 Minuten zur Folge.

## Patentansprüche

1. Verfahren zum Behandeln von Kaffeebohnen, insbesondere zum Bereitstellen von Kaffeebohnen mit verringerter Konzentration an Chlorogensäure im Vergleich zu unbehandelten Kaffeebohnen, umfassend die folgenden Schritte:
- Behandeln der Kaffeebohnen mit einem elektrischen Feld, und
- In-Kontakt-Bringen der Kaffeebohnen mit einem Reagens, das mit Chlorogensäure reagiert,
wobei das Reagens ein Chlorogensäure-spaltendes Enzym oder einen Mikroorganismus, der ein Chlorogensäure spaltendes Enzym exprimiert, umfasst.

2. Verfahren nach Anspruch 1, wobei der Mikroorganismus ausgewählt ist aus der Gruppe umfassend: *Aspergillus sp., Aspergillus niger, Aspergillus sojae, Aspergillus japonicus, Aspergillus oryzae, Talaromyces sp., Talaromyces stipitatus, Anaeromyces sp. Anaeromyces mucronatus, Ustilago sp., Ustilago maydis, Neurospora sp., Neurospora crassa, Pseudomonas fluorescens, Chlostridium spp., Rhizoctonia solani.*

3. Verfahren nach einem der Ansprüche 1 bis 2, wobei das Reagens eine Hydrolase, vorzugsweise eine Esterase, und besonders bevorzugt eine Chlorogensäure-Hydrolase (EC 3.1.1.42) enthält.

4. Verfahren nach einem der Ansprüche 1 bis 3, wobei die behandelten Kaffeebohnen ungeröstete Bohnen, grüne Bohnen, oder die Steinkerne von ungetrockneten Kaffeebeeren sind.

5. Verfahren nach einem der Ansprüche 1 bis 4, wobei der Schritt des In-Kontakt-Bringens ein Einweichen oder ein oberflächliches Anfeuchten der Kaffeebohnen umfasst.

6. Verfahren nach einem der Ansprüche 1 bis 5, wobei beim Behandeln mit einem elektrischen Feld ein Energieeintrag von wenigstens 0,01 kJ/kg, vorzugsweise von 1 kJ/kg bis 300 kJ/kg und besonders bevorzugt von 5 kJ/kg bis 50 kJ/kg in die Kaffeebohnen erfolgt.

7. Verfahren nach einem der Ansprüche 1 bis 6, wobei ein elektrisches Feld von 0,01 kV/cm bis 30 kV/cm, vorzugsweise von 0,5 kV/cm bis 3 kV/cm angelegt wird.

8. Verfahren nach einem der Ansprüche 1 bis 7, wobei die Kaffeebohne mit wenigstens 10 elektrischen Pulsen, vorzugsweisen 10 bis 200 elektrischen Pulsen, besonders bevorzugt 30 bis 50 elektrischen Pulsen behandelt wird.

9. Verfahren nach einem der Ansprüche 1 bis 8, wobei beim Behandeln ein gepulstes elektrisches Feld angelegt wird, das einen Zellaufschluss bewirkt, wobei die Kaffeebohnen vorzugsweise nicht-thermisch aufgeschlossen werden.

10. Verfahren nach einem der Ansprüche 1 bis 9, wobei die Kaffeebohnen mit einem elektrischen Feld behandelt werden, bevor oder während die Kaffeebohnen mit dem Reagens in Kontakt gebracht werden.

11. Verfahren nach einem der Ansprüche 1 bis 10, wobei die Kaffeebohnen mit einem elektrischen Feld behandelt werden, (a) nachdem die Kaffeebohnen getrocknet wurden, oder (b) bevor die Kaffeebohnen getrocknet wurden.

12. Verfahren nach einem der Ansprüche 1 bis 11, wobei die Kaffeebohnen mit einem Reagens in Kontakt gebracht werden, (a) nachdem die Pulpe von den Kaffeebohnen entfernt wurde, (b) nachdem die Kaffeebohnen fermentiert und gewaschen wurden, und/oder (c) nachdem die Kaffeebohnen getrocknet und geschält wurden.

## Claims

1. A method for treating coffee beans, in particular for providing coffee beans with a reduced concentration of chlorogenic acid as compared to untreated coffee beans, comprising the steps of:
- treating the coffee beans with an electric field, and
- contacting the coffee beans with a reagent that reacts with chlorogenic acid,
wherein said reagent comprises a chlorogenic acid-cleaving enzyme or a microorganism that expresses a chlorogenic acid-cleaving enzyme.

2. The method according to claim 1, wherein said microorganism is selected from the group consisting of: *Aspergillus sp., Aspergillus niger, Aspergillus sojae, Aspergillus japonicus, Aspegillus oryzae, Talaromyces sp., Talaromyces stipitatus, Anaeromyces sp. Anaeromyces mucronatus, Ustilago sp., Ustilago maydis, Neurospora sp., Neurospora crassa, Pseudomonas fluorescens, Chlostridium spp., Rhizoctonia solani.*

3. The method of any one of claims 1 to 2, wherein the reagent contains a hydrolase, preferably an esterase, and more preferably a chlorogenic acid hydrolase (EC 3.1.1.42).

4. The method of any one of claims 1 to 3, wherein the coffee beans treated are unroasted beans, green beans, or the stone cores of undried coffee berries.

5. The method of any one of claims 1 to 4, wherein the step of contacting comprises soaking or superficially moistening the coffee beans.

6. The method of any one of claims 1 to 5, wherein during treating with an electric field, an energy input of at least 0.01 kJ/kg, preferably from 1 kJ/kg to 300 kJ/kg and particularly preferably from 5 kJ/kg to 50 kJ/kg, is applied to the coffee beans.

7. The method of any one of claims 1 to 6, wherein an electrical field of 0.01 kV/cm to 30 kV/cm, preferably of 0.5 kV/cm to 3 kV/cm, is applied.

8. The method of any one of claims 1 to 7, wherein the coffee bean is treated with at least 10 electrical pulses, preferably 10 to 200 electrical pulses, particularly preferably 30 to 50 electrical pulses.

9. The method of any one of claims 1 to 8, wherein a pulsed electric field is applied during treating, said electric field causing cell disruption, wherein the coffee beans are preferably non-thermally opened up.

10. The method of any one of claims 1 to 9, wherein the coffee beans are treated with an electric field before or during the coffee beans are contacted with the reagent.

11. The method of any one of claims 1 to 10, wherein the coffee beans are treated with an electric field (a) after the coffee beans have been dried or (b) before the coffee beans have been dried.

12. The method of any one of claims 1 to 11, wherein the coffee beans are contacted with a reagent (a) after the pulp has been removed from the coffee beans, (b) after the coffee beans have been fermented and washed, and/or (c) after the coffee beans have been dried and shelled.

## Revendications

1. Procédé de traitement de grains de café, en particulier permettant de fournir des grains de café à concentration réduite en acide chlorogénique par rapport aux grains de café non traités, comprenant les étapes ci-dessous consistant à :
- traiter les grains de café avec un champ électrique, et
- mettre en contact les grains de café avec un réactif qui réagit avec l'acide chlorogénique,
dans lequel le réactif comprend une enzyme de clivage de l'acide chlorogénique ou un micro-organisme exprimant une enzyme de clivage de l'acide chlorogénique.

2. Procédé selon la revendication 1, dans lequel le micro-organisme est choisi dans le groupe comprenant : *Aspergillus sp., Aspergillus niger, Aspergillus sojae, Aspergillus japonicus, Aspergillus oryzae, Talaromyces sp., Talaromyces stipitatus, Anaeromyces sp., Anaeromyces mucronatus, Ustilago sp., Ustilago maydis, Neurospora sp., Neurospora crassa, Pseudomonas fluorescens, Clostridium spp., Rhizoctonia solani.*

3. Procédé selon l'une quelconque des revendications 1 à 2, dans lequel le réactif contient une hydrolase, de manière préférée une estérase, et de manière particulièrement préférée une hydrolase d'acide chlorogénique (EC 3.1.1.42).

4. Procédé selon l'une quelconque des revendications 1 à 3, dans lequel les grains de café traités sont des grains non torréfiés, des grains verts ou les graines de cerises de café non séchées.

5. Procédé selon l'une quelconque des revendications 1 à 4, dans lequel l'étape de mise en contact comprend une étape consistant à tremper ou à humidifier de manière superficielle les grains de café.

6. Procédé selon l'une quelconque des revendications 1 à 5, dans lequel, lors du traitement avec un champ électrique, un apport d'énergie d'au moins 0,01 kJ/kg, de manière préférée compris entre 1 kJ/kg et 300 kJ/kg et de manière particulièrement préférée compris entre 5 kJ/kg et 50 kJ/kg intervient au sein des grains de café.

7. Procédé selon l'une quelconque des revendications 1 à 6, dans lequel un champ électrique compris entre 0,01 kV/cm et 30 kV/cm, de manière préférée compris entre 0,5 kV/cm et 3 kV/cm, est appliqué.

8. Procédé selon l'une quelconque des revendications 1 à 7, dans lequel le grain de café est traité avec au moins 10 impulsions électriques, de manière préférée avec une quantité comprise entre 10 et 200 impulsions électriques, de manière particulièrement préférée avec une quantité comprise entre 30 et 50 impulsions électriques.

9. Procédé selon l'une quelconque des revendications 1 à 8, dans lequel un champ électrique pulsé provoquant une désintégration cellulaire est appliqué lors du traitement, dans lequel les grains de café sont de manière préférée désintégrés de manière non thermique.

10. Procédé selon l'une quelconque des revendications 1 à 9, dans lequel les grains de café sont traités avec un champ électrique avant ou pendant que les grains de café sont mis en contact avec le réactif.

11. Procédé selon l'une quelconque des revendications 1 à 10, dans lequel les grains de café sont traités avec un champ électrique, (a) après que les grains de café ont été séchés, ou (b) avant que les grains de café aient été séchés.

12. Procédé selon l'une quelconque des revendications 1 à 11, dans lequel les grains de café sont mis en contact avec un réactif (a) après que la pulpe a été retirée des grains de café, (b) après que les grains de café ont été fermentés et lavés, et/ou (c) après que les grains de café ont été séchés et pelés.
